# FASCICULE DE BREVET EUROPEEN

(11) **EP 2 889 803 B1**
(45) Date de publication et mention de la délivrance du brevet: **21.02.2018**
(21) Numéro de dépôt: 14200267.4
(22) Date de dépôt: 24.12.2014
(51) Int. Cl.: G06F 21/85, H04L 12/713, G06F 21/53, H04L 29/06

(54) **EQUIPEMENT DE SÉCURITÉ DE CLOISONNEMENT ENTRE DES PREMIER ET SECOND DOMAINES, COMPORTANT UN COMPOSANT DE PILOTE**
SICHERHEITSAUSRÜSTUNG ZUR ABSCHIRMUNG ZWISCHEN ERSTEN UND ZWEITEN BEREICHEN, DIE EINE STEUERKOMPONENTE UMFASST
PARTITIONING SAFETY DEVICE BETWEEN FIRST AND SECOND FIELDS, COMPRISING A DRIVER COMPONENT

(30) Priorité: 24.12.2013 FR 1303074; 24.12.2013 FR 1303075
(43) Date de publication de la demande: 01.07.2015
(73) Titulaire: Thales, 92200 Neuilly Sur Seine (FR)
(72) Inventeur: Lacroix, Jean-Marc, 92622 Gennevilliers (FR); Curo, Franck, 92622 Gennevilliers (FR); Ragot, Dominique, 92622 Gennevilliers (FR); Thierry, Philippe, 92622 Gennevilliers (FR); Germain, Fabien, 92622 Gennevilliers (FR)
(74) Mandataire: Lavoix

(56) Documents cités:
- WO-A1-2010/063768
- DE-A1-102012 105 068
- US-B1- 7 607 167
- "WIND RIVER VXWORKS MILS PLATFORM 3.0 TABLE OF CONTENTS Run-Time Components", , 13 juin 2013 (2013-06-13), XP055125417, Extrait de l'Internet: URL:https://web.archive.org/web/2013061309 0136/http://www.windriver.com/products/pla tforms/vxworks-mils/MILS-3_PN.pdf [extrait le 2014-06-26]

## Description

La présente invention concerne un équipement de sécurité de cloisonnement entre des premier et second domaines, comportant : une couche matérielle, comportant un moyen de calcul, un moyen de mémorisation, et des premier et second moyens d'interface avec lesdits premier et second domaines ; une couche de virtualisation de la couche matérielle, comportant un noyau et un hyperviseur ; et une couche applicative comportant : un premier composant d'interface, pour échanger des données avec le premier domaine ; un second composant d'interface, pour échanger des données avec le second domaine ; et un composant de sécurité formant un sas d'échange de données entre les premier et second composants.

Dans le domaine de la sécurité des systèmes d'information, le document FR 2008 006839 ou encore le document US 7 607 167 B1 divulguent respectivement un équipement de sécurité du type précité propre à réaliser un cloisonnement entre des premier et second domaines. Le document DE 10 2012 105 068 A1 décrit un système similaire, basé sur des machines virtuelles et faisant le lien entre plusieurs pilotes d'interfaces isolés au travers d'une partition de contrôle. Dans chaque domaine, un pilote d'interface virtuel est implémenté. Avantageusement, un tel équipement de sécurité constitue une passerelle entre un premier domaine présentant un niveau de sécurité « bas » et un second domaine présentant un niveau de sécurité « haut ».

La couche applicative de l'équipement de sécurité du document FR 2008 006839 B1 comporte des premier et second composants d'interface et un composant de sécurité.

Le premier composant d'interface est dédié à la gestion des échanges de paquets de données avec le premier domaine. Il comporte en particulier les pilotes nécessaires à la communication avec le premier domaine, à travers une première interface d'entrée/sortie de la couche physique de l'équipement de sécurité.

Lorsqu'il est exécuté, le premier composant d'interface place les paquets de données reçus du premier domaine, dans un premier espace de stockage d'entrée de la mémoire de l'équipement de sécurité. Le premier composant d'interface lit les paquets de données d'un premier espace de stockage de sortie de la mémoire et les transmet vers le premier domaine.

De manière similaire, le second composant d'interface est dédié à la gestion des échanges de données avec le second domaine. Il comporte en particulier les pilotes nécessaires à la communication avec le second domaine, à travers la seconde interface. Lorsqu'il est exécuté, le second composant d'interface accède à un second espace de stockage de sortie de la mémoire et transmet les paquets lus vers le second domaine. Le second composant d'interface place les paquets reçus du second domaine, dans un second espace de stockage d'entrée.

Le composant de sécurité forme un sas dans l'échange des paquets de données entre les premier et second composants d'interface. Lorsqu'il est exécuté, le composant de sécurité lit les paquets de données du premier espace de stockage d'entrée, les traite et place les paquets traités dans le second espace de stockage de sortie. De manière similaire, le composant de sécurité lit les paquets de données du second espace de stockage d'entrée, les traite et place les paquets traités dans le premier espace de stockage de sortie.

Un partitionnement spatial (c'est-à-dire le fait que les espaces de stockage d'entrée et de sortie d'un canal de circulation du flux de données d'un domaine à l'autre correspondent à des espaces différents et prédéterminés de la mémoire) et un partitionnement temporel (c'est-à-dire le fait que les composants sont exécutés successivement et séparément les uns des autres par le processeur de l'équipement de sécurité, la durée d'exécution d'un composant étant contraint), assurent le cloisonnement entre les premier et second domaines.

Cependant, si le composant de sécurité peut être certifié sur le plan de la sécurité de fonctionnement, il n'en va pas de même des premier et second composants d'interface.

En effet, alors que le composant de sécurité est un composant d'application, intégrant uniquement un programme applicatif propre à accéder directement aux ressources matérielles, un composant d'interface est un composant de système d'exploitation intégrant un système d'exploitation (OS en anglais pour « operating system »), tel que le système LINUX, et éventuellement un ou plusieurs programmes applicatifs, qui sont propres à accéder aux ressources matérielles mais uniquement à travers le système d'exploitation.

Ainsi, un composant de système d'exploitation est riche, au sens où de nombreuses fonctionnalités sont implémentées par défaut. Le programme applicatif utilise certaines des fonctionnalités disponibles, par simple appel aux fonctions correspondantes. En particulier, un composant d'interface utilise les pilotes de périphériques natifs du système d'exploitation.

Or, un système d'exploitation est un programme complexe, qui comporte quelques centaines de milliers de lignes de code. C'est un programme qui évolue régulièrement au fur et à mesure de la mise à disposition de nouvelles versions. Dans le cas du système LINUX, le programme est mis à jour par une communauté dont les membres ne sont pas connus.

Il n'est donc pas possible d'évaluer et par conséquent de certifier un système d'exploitation. Par voie de conséquence, il n'est pas possible de certifier un composant de système d'exploitation.

Ainsi, à cause du système d'exploitation qu'il renferme, un composant de système d'exploitation et, en particulier, un composant d'interface, présente des failles de sécurité.

En exploitant ces failles de sécurité, il est possible de contourner le cloisonnement réalisé par le composant de sécurité.

L'invention a donc pour but de pallier ce problème.

A cet effet, l'invention a pour objet un équipement de sécurité du type précité, caractérisé en ce que au moins un composant d'interface parmi les premier et second composants d'interface est associé à un composant supplémentaire de pilote d'interface, le noyau réalisant un partitionnement spatial tel que seul le composant de pilote possède un accès exclusif à un espace de stockage du moyen de mémorisation alloué au moyen d'interface correspondant et le composant de pilote et le composant d'interface échangent des données par l'intermédiaire d'un espace de mémoire partagé du moyen de mémorisation.

En dotant le composant de sécurité d'un composant de pilote du type composant d'application et en bridant les ports de sortie du composant d'interface du type composant de système d'exploitation, les failles de sécurité associées au pilotes natifs du système d'exploitation du composant d'interface sont éliminées.

Suivant des modes particuliers de réalisation, l'équipement comporte une ou plusieurs des caractéristiques suivantes :
- le composant d'interface et le composant de pilote associé sont exécutés ensemble dans une même partition temporelle.
- le composant d'interface et le composant de pilote associé sont exécutés séparément dans deux partitions temporelles.
- le noyau de la couche de virtualisation est un noyau de séparation.
- le composant de sécurité réalise un échange de données du type diode, moyen cryptographique, ou filtre.
- le composant de sécurité réalise un échange de données du type diode entre un espace de stockage d'entrée du côté du premier domaine et un espace de stockage de sortie du côté du second domaine.
- le premier composant d'interface est associé à un premier composant de pilote et le second composant d'interface est associé à un second composant de pilote.
- chaque composant de pilote met en oeuvre des applications de service, en particulier de contrôle du flux de données transitant par le composant pilote, ou du moyen d'interface d'entrée/sortie.

L'invention sera mieux comprise à la lecture de la description qui va suivre d'un mode de réalisation, donné uniquement à titre d'exemple illustratif et non limitatif, et faite en se référant aux dessins annexés, sur lesquels :
- la Figure 1 est une vue schématique d'un équipement de sécurité selon l'invention ;
- la Figure 2 est un graphe temporel représentant l'exécution des différents composants de l'équipement de sécurité de la figure 1.

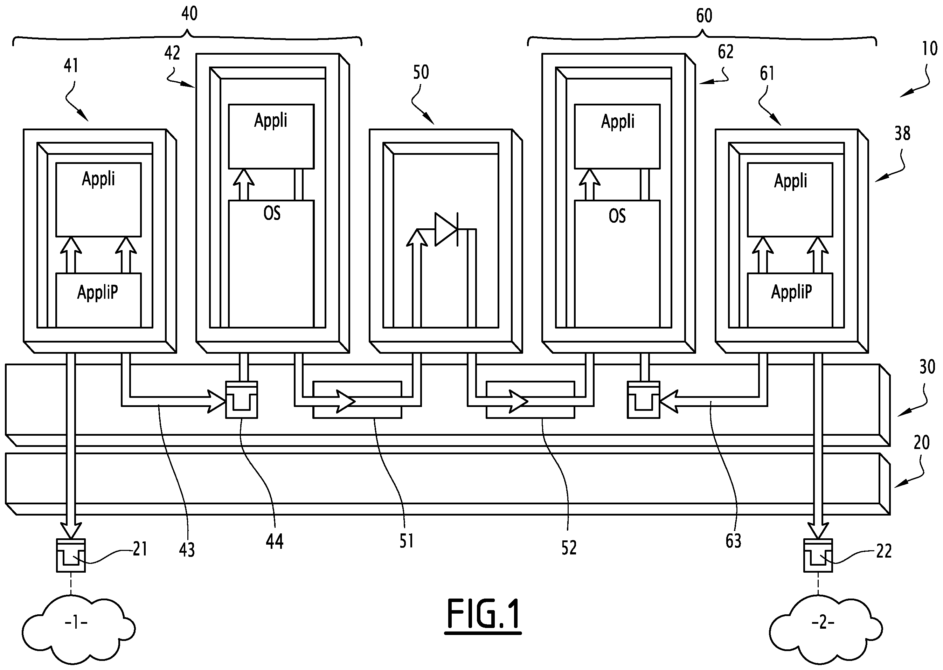

Sur la Figure 1 est représenté un équipement de sécurité 10 établissant un cloisonnement dans l'échange de paquets de données entre des premier et second domaines, 1 et 2.

Dans le présent document, le terme de « domaine » est à prendre au sens large : il peut s'agir d'un ou plusieurs autre(s) équipement(s) informatique(s), connecté(s) à l'équipement de sécurité considéré, via une liaison de communication adaptée. Il peut également s'agir d'un programme associé à une partition et exécuté sur l'équipement de sécurité considéré. Cependant, l'invention s'applique à un équipement de sécurité en communication via au moins une interface adaptée avec un autre équipement, constituant un domaine.

Dans le mode de réalisation décrit ici en détail, les premier et second domaines sont des réseaux connectés à l'équipement de sécurité par des liaisons de communication respectant le protocole ETHERNET. Cependant, les principes d'architectures décrits ici ne se limitent pas à type particulier de protocole, et de nombreuses variantes de réalisation sont envisageables par l'homme du métier.

Le premier domaine 1 présente un niveau de sécurité « bas », plus faible que le niveau de sécurité « haut » du second domaine 2.

Ceci justifie la mise en oeuvre, par le composant de sécurité 10, d'une politique de sécurité asymétrique entre les paquets de données circulant du premier domaine vers le second domaine et celles circulant du second domaine vers le premier domaine.

Dans le mode de réalisation décrit ici en détail, le composant de sécurité 10 possède une fonction de diode, autorisant la transmission de paquets de données d'un émetteur du premier domaine 1 vers un récepteur du second domaine 2, et interdisant, en fonctionnement nominal, tout échange de paquets de données du second domaine 2 vers le premier domaine 1.

L'équipement de sécurité 10 comporte une couche matérielle 20, une couche de virtualisation 30 et une couche applicative 38.

La couche matérielle 20 comporte un moyen de calcul, comportant un processeur et un mécanisme matériel de compartimentation de la mémoire, appelé MMU (selon l'acronyme anglais « Memory Management Unit »), et un moyen de mémorisation, comportant une mémoire, qui est une mémoire vive (RAM).

La couche matérielle 20 comporte également des moyens d'interface d'entrée/sortie. Par exemple, l'équipement de sécurité comporte une première interface 21, du type ETHERNET, pour la connexion au premier domaine 1 et une seconde interface 22, du type EHERNET, pour la connexion au second domaine 2.

La couche physique 20 comporte enfin un bus physique de communication entre les moyens de calcul, de mémorisation et d'interface.

La couche de virtualisation 30 permet de virtualiser la couche physique 20. Elle comporte un noyau et un hyperviseur.

De manière connue en soi, le noyau est du type noyau de séparation (aussi dénommé « separation kernel »). Il permet, en s'appuyant sur le MMU, le partitionnement spatial de la mémoire et l'affectation (« mapping » en anglais) à un composant de la couche applicative, d'un espace spécifique de la mémoire vive.

De manière également connue en soi, l'hyperviseur assure le partitionnement temporel, en allouant une fraction du temps d'utilisation du moyen de calcul à chaque composant ou groupe de composant de la couche applicative, et ceci conformément à un plan d'ordonnancement défini lors de la configuration de l'équipement de sécurité.

La couche applicative 38 comporte une pluralité de composants logiciels.

Un premier type de composant logiciel, dit d'application, intègre uniquement un programme applicatif Appli, propre à accéder directement aux ressources matérielles.

Un second type de composant logiciel, dit de système d'exploitation, intègre un système d'exploitation OS, tel que le système LINUX, et éventuellement un ou plusieurs programmes applicatifs Appli, propre à accéder aux ressources matérielles que lui a autorisé l'hyperviseur, uniquement à travers le système d'exploitation.

Dans le mode de réalisation représenté sur la figure 1, la couche applicative 38 comporte un premier compartiment 40, comportant un premier composant de pilote 41 et un premier composant d'interface 42, un composant de sécurité 50, et un second compartiment 60, comportant un second composant de pilote 61 et un second composant d'interface 62.

Si les premier et second composants d'interface, 42 et 62, sont des composants de système d'exploitation, les premier et second composants de pilote 41 et 61 et le composant de sécurité 50 sont des composants d'application.

Un compartiment est divisé fonctionnellement entre un composant de pilote et un composant d'interface.

Grâce au partitionnement spatial effectué par le noyau de séparation, le composant d'interface n'a pas accès à l'espace de la mémoire réservé à l'interface d'entrée/sortie de la couche matérielle. Seul le composant de pilote possède un accès exclusif à l'espace de la mémoire de l'interface d'entrée/sortie de la couche matérielle.

Par ailleurs, un canal de communication, a priori bidirectionnel, est défini entre le composant d'interface et le composant de pilote.

Ainsi, en communication descendante, une fonction du composant d'interface, appelée par un pilote natif du système d'exploitation de ce composant n'écrit pas une donnée dans l'espace de la mémoire de l'interface d'entrée/sortie, mais dans un espace de mémoire partagé avec le composant de pilote. Celui-ci lit la donnée écrite dans l'espace de mémoire partagé et lance une fonction correspondante pour écrire dans l'espace de la mémoire de l'interface d'entrée/sortie.

Une description similaire pourrait être faite en communication montante. Le composant de pilote appelle une fonction nécessitant la lecture d'une donnée écrite dans l'espace de mémoire de l'interface d'entrée/sortie et écrit la donnée correspondant dans l'espace de mémoire partagé avec le composant d'interface. Celui-ci appelle la fonction correspondante du pilote natif et lit la donnée placée dans l'espace de mémoire partagé.

Le composant de pilote peut avantageusement, en plus de l'application de pilote AppliP, être enrichi d'une application de service Appli, permettant par exemple la maîtrise des opérations de contrôle du périphérique connecté à l'interface considérée, ou encore la maîtrise du profil des flux de données, montant ou descendant, circulant à travers le composant de pilote.

Ainsi, le premier compartiment 40 est dédié à l'échange de paquets de données avec le premier domaine 1. Lorsqu'il est exécuté par le moyen de calcul, le premier compartiment 40 écrit les paquets de données provenant du premier domaine 1 dans un espace de stockage d'entrée 51 de la mémoire de la couche physique 20.

Plus précisément, le premier compartiment 40 comporte un premier composant de pilote 41 et un premier composant d'interface 42. Le partitionnement spatial assure l'accès du premier composant d'interface 42 à la première interface 21 à travers le composant de pilote 41 uniquement, en utilisant l'espace de mémoire partagé 44. Un canal de communication exclusif est ainsi défini entre le composant d'interface 42 et le composant de pilote 41.

De manière similaire, le second compartiment 60 est dédié à l'échange de paquets de données avec le second domaine 2. Lorsqu'il est exécuté par le moyen de calcul, le second compartiment 60 lit les paquets de données d'un espace de stockage de sortie 52 de la mémoire de la couche physique 20 et les transmets vers le second domaine 2.

Plus précisément, le second compartiment 60 comporte un second composant de pilote 61 et un second composant d'interface 62. Le partitionnement spatial assure l'accès du second composant d'interface 62 à la seconde interface 22 à travers le composant de pilote 61 uniquement, en utilisant l'espace de mémoire partagé 64. Un canal de communication exclusif est ainsi défini entre le composant d'interface 62 et le composant de pilote 61.

Le composant de sécurité forme un sas d'échange des paquets de données entre les premier et second compartiments 40 et 60.

Dans le mode de réalisation décrit ici en détail, le composant de sécurité étant du type diode, il est propre à lire un paquet de données placé dans l'espace de stockage d'entrée 51 et à l'écrire dans l'espace de stockage de sortie 52.

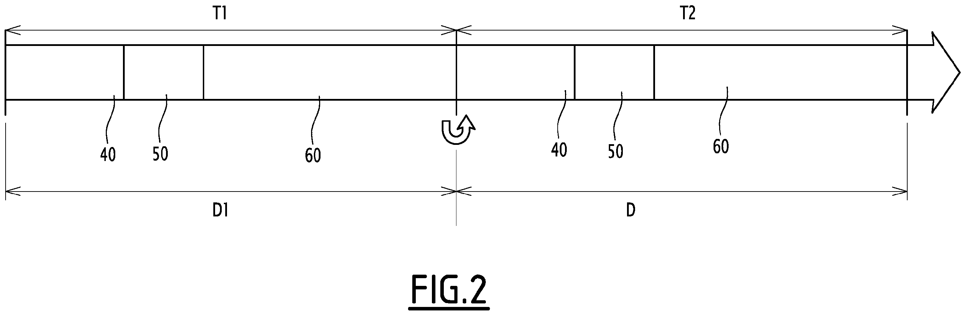

Sur la figure 2, l'enchaînement temporel de l'exécution des différents composants ou groupe de composants de l'équipement de sécurité 10 est représenté au cours d'une trame T1, et de la trame suivante T2. Les trames possèdent une durée D constante prédéterminée.

Il est à noter que l'ordonnancement de l'exécution des composants est identique d'une trame à l'autre. Cet ordonnancement temporel est défini par une partition d'initialisation exécutée une seule fois au démarrage du composant de sécurité. La partition d'initialisation n'est pas représentée sur la figure 1.

Sont successivement exécutés, dans une première partition temporelle, les premiers composants de pilote et d'interface, 41 et 42, dans une seconde partition temporelle, le composant de sécurité 50, et, dans une troisième partition temporelle, les seconds composants de pilote et d'interface, 61 et 62.

En variante, l'exécution du composant de pilote et celle du pilote d'interface d'un même compartiment peuvent être partitionnées temporellement l'une par rapport à l'autre.

En variante, le composant de sécurité réalise un autre type de cloisonnement entre les premier et second domaines.

Dans encore une autre variante, indépendante des précédentes, seul le compartiment d'échange de données avec le domaine dont le niveau de sécurité est le plus bas est divisé fonctionnellement comme cela vient d'être présenté, l'autre compartiment étant conforme à un composant d'interface de l'art antérieur.

Dans encore une autre variante, les compartiments 40, 60 et le composant de sécurité 50 peuvent être exécutés de manière ordonnancée sur plusieurs processeurs de calcul en parallèle, à partir du moment où si deux domaines venaient à s'exécuter sur le même processeur de calcul, leur ordonnancement serait alors décomposé de manière stricte, comme décrit dans les variantes précédentes.

Ainsi, l'homme du métier constatera que le composant de pilote est un composant du type « PROXY », propre à agir pour le compte du composant d'interface.

Le composant de pilote qui est un composant d'application peut être certifié.

Les accès du composant d'interface à la couche matérielle sont évités.

En inhibant de la sorte l'accès à des canaux cachés du système d'exploitation d'un composant riche, la sécurité de fonctionnement de l'équipement de sécurité est améliorée.

## Revendications

1. Equipement de sécurité (10) de cloisonnement entre des premier et second domaines (1, 2), comportant :
- une couche matérielle (20), comportant un moyen de calcul, un moyen de mémorisation, et des premier et second moyens d'interface (21, 22) avec lesdits premier et second domaines ;
- une couche de virtualisation (30) de la couche matérielle, comportant un noyau et un hyperviseur ;
- une couche applicative (38) comportant :
- un premier composant d'interface (42), pour échanger des données avec le premier domaine, le premier composant d'interface (42) étant du type composant de système d'exploitation intégrant un système d'exploitation riche, au sens où de nombreuses fonctionnalités sont implémentées par défaut et qu'il n'est pas possible de le certifier, le système d'exploitation comportant en particulier un pilote natif ;
- un second composant d'interface (62), pour échanger des données avec le second domaine, le second composant d'interface (62) étant du type composant de système d'exploitation intégrant un système d'exploitation riche, au sens où de nombreuses fonctionnalités sont implémentées par défaut et qu'il n'est pas possible de le certifier, le système d'exploitation comportant en particulier un pilote natif ;
- un composant de sécurité (50) formant un sas d'échange de données entre les premier et second composants,
**caractérisé en ce que** au moins un composant d'interface parmi les premier et second composants d'interface est associé à un composant de pilote (41, 61), le composant de pilote étant du type composant d'application qu'il est possible de certifier, le noyau réalisant un partitionnement spatial tel que seul le composant de pilote possède un accès exclusif à un espace de stockage du moyen de mémorisation alloué au moyen d'interface (21, 22) correspondant,
et le composant de pilote (41, 61) et le composant d'interface échangent des données par l'intermédiaire d'un espace de mémoire partagé (44, 64) du moyen de mémorisation, le composant de pilote (41, 61) étant un composant du type « PROXY » propre à agir pour le compte du composant d'interface,
de sorte que, dans une première direction d'échange de données, une fonction du composant d'interface, appelée par le pilote natif du système d'exploitation, écrit une donnée dans l'espace de mémoire partagé avec le composant de pilote et le composant de pilote lit la donnée écrite dans l'espace de mémoire partagé et lance une fonction correspondante pour écrire dans l'espace de stockage du moyen de mémorisation alloué au moyen d'interface (21, 22) correspondant ; et, dans une seconde direction d'échange de données, le composant de pilote appelle une fonction nécessitant la lecture d'une donnée écrite dans l'espace de stockage du moyen de mémorisation alloué au moyen d'interface (21, 22) correspondant, et écrit la donnée correspondant dans l'espace de mémoire partagé avec le composant d'interface, et le composant d'interface appelle la fonction correspondante du pilote natif et lit la donnée placée dans l'espace de mémoire partagé,
et **en ce que** le composant de pilote (41, 61) met en oeuvre des applications de service de contrôle du flux de données transitant par le composant de pilote.

2. Equipement de sécurité selon la revendication 1, **caractérisé en ce que** le composant d'interface (42, 62) et le composant de pilote (41, 61) associé sont exécutés ensemble dans une même partition temporelle.

3. Equipement de sécurité selon la revendication 1, **caractérisé en ce que** le composant d'interface (42, 62) et le composant de pilote (41, 61) associé sont exécutés séparément dans deux partitions temporelles.

4. Equipement de sécurité selon l'une quelconque des revendications 1 à 3, **caractérisé en ce que** le noyau de la couche de virtualisation (30) est un noyau de séparation.

5. Equipement de sécurité selon l'une quelconque des revendications 1 à 4, **caractérisé en ce que** le composant de sécurité (50) réalise un échange de données du type diode, moyen cryptographique, ou filtre.

6. Equipement de sécurité selon l'une quelconque des revendications 1 à 5, **caractérisé en ce que** le composant de sécurité (50) réalise un échange de données du type diode entre un espace de stockage d'entrée (51) du côté du premier domaine (1) et un espace de stockage de sortie (52) du côté du second domaine (2).

7. Equipement de sécurité selon l'une quelconque des revendications 1 à 6, **caractérisé en ce que** le premier composant d'interface est associé à un premier composant de pilote et le second composant d'interface est associé à un second composant de pilote.

## Patentansprüche

1. Sicherheitseinrichtung (10) zum Abschirmen zwischen einem ersten und einem zweiten Bereich (1, 2), aufweisend:
- eine Hardwareschicht (20), die ein Rechenmittel, ein Speichermittel und ein erstes und ein zweites Schnittstellenmittel (21, 22) zu dem ersten und dem zweiten Bereich aufweist,
- eine Virtualisierungsschicht (30) der Hardwareschicht, die einen Kern und einen Hypervisor aufweist,
- eine Anwendungsschicht (38), die aufweist:
- eine erste Schnittstellenkomponente (42), um mit dem ersten Bereich Daten auszutauschen, wobei die erste Schnittstellenkomponente (42) vom Typ einer Betriebssystemkomponente ist, die ein in dem Sinne reiches Betriebssystem integriert, dass zahlreiche Funktionalitäten standardmäßig implementiert sind und es nicht möglich ist, dieses zu zertifizieren, wobei das Betriebssystem insbesondere einen nativen Treiber aufweist,
- eine zweite Schnittstellenkomponente (62), um mit dem zweiten Bereich Daten auszutauschen, wobei die zweite Schnittstellenkomponente (62) vom Typ einer Betriebssystemkomponente ist, die ein in dem Sinne reiches Betriebssystem integriert, dass zahlreiche Funktionalitäten standardmäßig implementiert sind und es nicht möglich ist, dieses zu zertifizieren, wobei das Betriebssystem insbesondere einen nativen Treiber aufweist,
- eine Sicherheitskomponente (50), die eine Schleuse zum Austauschen von Daten zwischen der ersten und der zweiten Komponente bildet,
**dadurch gekennzeichnet, dass** mindestens eine Schnittstellenkomponente von der ersten und der zweiten Schnittstellenkomponente mit einer Treiberkomponente (41, 61) verknüpft ist, wobei die Treiberkomponente vom Typ einer Anwendungskomponente ist, die zertifiziert werden kann,
wobei der Kern eine räumliche Partition realisiert, bei der nur die Treiberkomponente einen exklusiven Zugriff auf einen Speicherplatz des Speichermittels hat, der dem entsprechenden Schnittstellenmittel (21, 22) zugewiesen ist,
und die Treiberkomponente (41, 61) und die Schnittstellenkomponente Daten über einen geteilten Speicherplatz (44, 64) des Speichermittels austauschen, wobei die Treiberkomponente (41, 61) eine Komponente des "PROXY"-Typs ist, die in der Lage ist, für die Schnittstellenkomponente zu wirken,
so dass, in einer ersten Datenaustauschrichtung, eine Funktion der Schnittstellenkomponente, die durch den nativen Treiber des Betriebssystems aufgerufen wird, eine Information in den mit der Treiberkomponente geteilten Speicherplatz schreibt und die Treiberkomponente die in den geteilten Speicherplatz geschriebene Information liest und eine entsprechende Funktion startet, um in den Speicherplatz des Speichermittels zu schreiben, der dem entsprechenden Schnittstellenmittel (21, 22) zugewiesen ist, und, in einer zweiten Datenaustauschrichtung, die Treiberkomponente eine Funktion aufruft, die das Lesen einer Information erfordert, die in den Speicherplatz des Speichermittels geschrieben ist, der dem entsprechenden Schnittstellenmittel (21, 22) zugewiesen ist, und die entsprechende Information in den mit der Schnittstellenkomponente geteilten Speicherplatz schreibt, und die Schnittstellenkomponente die entsprechende Funktion des nativen Treibers aufruft und die in dem geteilten Speicherplatz platzierte Information liest,
und dass die Treiberkomponente (41, 61) Dienstanwendungen zum Steuern des Datenflusses durchführt, der die Treiberkomponente durchquert.

2. Sicherheitseinrichtung gemäß Anspruch 1, **dadurch gekennzeichnet, dass** die Schnittstellenkomponente (42, 62) und die verknüpfte Treiberkomponente (41, 61) gemeinsam in einer gleichen temporären Partition ausgeführt werden.

3. Sicherheitseinrichtung gemäß Anspruch 1, **dadurch gekennzeichnet, dass** die Schnittstellenkomponente (42, 62) und die verknüpfte Treiberkomponente (41, 61) getrennt in zwei temporären Partitionen ausgeführt werden.

4. Sicherheitseinrichtung gemäß irgendeinem der Ansprüche 1 bis 3, **dadurch gekennzeichnet, dass** der Kern der Virtualisierungsschicht (30) ein Trennungskern ist.

5. Sicherheitseinrichtung gemäß irgendeinem der Ansprüche 1 bis 4, **dadurch gekennzeichnet, dass** die Sicherheitskomponente (50) einen Datenaustausch des Dioden-, des kryptografisches-Mittel- oder des Filtertyps realisiert.

6. Sicherheitseinrichtung gemäß irgendeinem der Ansprüche 1 bis 5, **dadurch gekennzeichnet, dass** die Sicherheitskomponente (50) einen Datenaustausch des Diodentyps zwischen einem Eingangsspeicherplatz (51) auf der Seite des ersten Bereichs (1) und einem Ausgangsspeicherplatz (52) auf der Seite des zweiten Bereichs (2) realisiert.

7. Sicherheitseinrichtung gemäß irgendeinem der Ansprüche 1 bis 6, **dadurch gekennzeichnet, dass** die erste Schnittstellenkomponente mit einer ersten Treiberkomponente verknüpft ist und die zweite Schnittstellenkomponente mit einer zweiten Treiberkomponente verknüpft ist.

## Claims

1. Security equipment (10) for partitioning between first and second domains (1, 2), comprising:
- a hardware layer (20), comprising a computation means, a memory storage means, and first and second interface means (21, 22) with said first and second domains;
- a virtualization layer (30) of the hardware layer, comprising a core and a hypervisor;
- an application layer (38) comprising:
- a first interface component (42), for exchanging data with the first domain, the first interface component (42) being of the operating system component type integrating a rich operating system, in the sense that numerous functionalities are implemented by default and it is not possible to certify it, the operating system comprising in particular a native driver;
- a second interface component (62), for exchanging data with the second domain, the second interface component (62) being an operating system type of component, integrating a rich operating system, in the sense that numerous functionalities are implemented by default and it is not possible to certify it, the operating system comprising in particular a native driver;
- a security component (50) forming a data exchange cell between the first and second components,
**characterised in that** at least one interface component of the first and second interface components is associated with a driver component (41, 61), the driver component being an application type of component that it is possible to certify,
the core performing a spatial partitioning such that only the driver component has exclusive access to a storage space of the memory storage means allocated to the corresponding interface means (21, 22,),
and the driver component (41, 61) and the interface component exchange data by means of a shared memory space (44, 64) of the memory storage means, the driver component (41, 61) being a "PROXY" type component suitable for acting on behalf of the interface component,
in such a way that, in a first data exchange direction, a function of the interface component, called by the native driver of the operating system, writes data in the memory space shared with the driver component and the driver component reads the data written in the shared memory space and launches a corresponding function to write in the storage space of the memory storage means allocated to the corresponding interface means (21, 22); and in a second data exchange direction, the driver component calls a function requiring the reading of data written in the storage space of the memory storage means allocated to the corresponding interface means (21, 22), and writes the corresponding data in the memory space shared with the interface component, and the interface component calls the corresponding function of the native driver and reads the data placed in the shared memory space,
and **in that** the driver component (41, 61) executes service applications to control the data flow passing through the driver component.

2. Security equipment according to claim 1, **characterised in that** the interface component (42, 62) and the associated driver component (41, 61) are executed together in the same temporary partition.

3. Security equipment according to claim 1, **characterised in that** the interface component (42, 62) and the associated driver component (41, 61) are executed separately in two temporary partitions.

4. Security equipment according to any one of claims 1 to 3, **characterised in that** the core of the virtualisation layer (30) is a separation core.

5. Security equipment according to any one of claims 1 to 4, **characterised in that** the security component (50) performs a data exchange of the type of diode, cryptographic means, or filter.

6. Security equipment according to any one of claims 1 to 5, **characterised in that** the security component (50) performs a diode-type exchange of data between an input storage space (51) on the side of the first domain (1) and an output storage space (52) on the side of the second domain (2).

7. Security equipment according to any one of claims 1 to 6, **characterised in that** the first interface component is associated with a first driver component and the second interface component is associated with a second driver component.
